Europäisches Patentamt

European Patent Office

Office européen des brevets

(19)

(11) **EP 0 625 369 B1**

(12) **FASCICULE DE BREVET EUROPEEN**

(45) Date de publication et mention
de la délivrance du brevet:
**12.03.1997 Bulletin 1997/11**

(51) Int. Cl.⁶: **B01D 53/56**, B01J 29/26,
B01J 29/24

(21) Numéro de dépôt: **94401005.7**

(22) Date de dépôt: **06.05.1994**

(54) **Procédé d'élimination de N2O dans les effluents gazeux provenant des oxydations nitriques**

Verfahren zur Entfernung von N2O aus Abgasen von Stickoxid-Oxidationen

Process for removing N2O in gaseous effluents from nitric oxidations

(84) Etats contractants désignés:
**AT BE CH DE DK ES FR GB GR IE IT LI LU NL PT
SE**

(30) Priorité: **10.05.1993 FR 9305573**

(43) Date de publication de la demande:
**23.11.1994 Bulletin 1994/47**

(73) Titulaire: **GRANDE PAROISSE S.A.**
**F-92800 Puteaux (FR)**

(72) Inventeur: **Tretjak, Serge**
**F-44600 Saint Nazaire (FR)**

(74) Mandataire: **Haicour, Philippe**
**ELF ATOCHEM S.A.,**
**Département Propriété Industrielle.**
**4-8, Cours Michelet,**
**La Défense 10**
**92091 Paris Cédex 42 (FR)**

(56) Documents cités:
**EP-A- 0 325 511         DE-A- 1 964 419**
**DE-A- 4 128 629         US-A- 4 571 329**
**US-A- 4 867 954**

• **DATABASE WPI Section Ch, Week 9016, Derwent
Publications Ltd., London, GB; Class E36, AN
90-119032 & JP-A-2 068 120 (BABCOCK-HITACHI
KK) 2 Septembre 1988**

**Description**

La présente invention se rapporte au traitement des effluents gazeux azotés issus des procédés de synthèse organique comportant une phase d'oxydation nitrique pour en abaisser la teneur en protoxyde d'azote avant rejet à l'atmosphère.

Certaines synthèses de composés organiques procèdent de l'oxydation nitrique d'un intermédiaire. C'est ainsi que, par exemple, on produit l'acide adipique par oxydation nitrique du cyclohexanol, le glyoxal par celle de l'acétaldéhyde, ou encore l'acide glyoxylique par celle du glyoxal. Un sous-produit indésirable et abondant de ces réactions est le protoxyde d'azote $N_2O$. La présente invention porte sur un procédé pour éliminer efficacement le protoxyde d'azote des effluents gazeux générés par ces réactions d'oxydation.

Ces effluents gazeux contiennent, outre une très forte proportion de protoxyde d'azote, de l'azote, de l'oxygène, du gaz carbonique et des oxydes d'azote tels que NO et $NO_2$, qu'on rassemble sous l'appellation commune $NO_x$. Leur composition est assez bien représentée par:

- $N_2O$ : 30-50 %
- $CO_2$ : env. 5 %
- $O_2$ : 1-4%
- $NO_x$ :0-5000 ppm
- $N_2$ : complément

Jusqu'à présent, on se contentait de les épuiser en $NO_x$ par lavage à l'eau dans une tour d'absorption et on rejetait les gaz à l'atmosphère, sans autre traitement. Cette situation est devenue inacceptable pour des raisons de protection de l'environnement.

On a rencontré la description d'une destruction catalytique du N2O sur catalyseur à l'argent supporté sur alumine dopée ou non (DE 41 28629). A vrai dire, le procédé ne fonctionne que bien que si les temps de contact gaz/catalyseurs sont suffisamment longs (illustrés par de relativement faibles vitesses volumétriques horaires de l'ordre de 4.000 $h^{-1}$). Pour les plus fortes VVH habituellement rencontrées industriellement, ces catalyseurs à l'alumine s'avèrent par trop paresseux.

Dans un tout autre domaine, celui de la production d'acide nitrique par oxydation d'ammoniac, on rencontre aussi un problème de traitement avant rejet à l'atmosphère d'effluents gazeux contenant divers oxydes d'azote dans lesquels dominent les $NO_x$ que l'on s'efforce de détruire avant rejet à l'atmosphère. Les demandes de brevets français publiées sous les n° 2.613.253 et 2.622.474 décrivent ainsi des modes de destruction des $NO_x$ par l'ammoniac catalysée par des mordénites, conditions dans lesquelles il s'est avéré que les gaz de sortie contiennent pratiquement autant de protoxyde d'azote qu'avant traitement. Il s'agit de résultats industriels en contradiction apparente avec des publications scientifiques relatant la catalyse de la décomposition du protoxyde d'azote sur des aluminosilicates voisins, notamment Aparicio et coll. pour l'activité catalytique de zéolites Y ou de mordénites échangées (J. Catal. vol 104(2), pp.381; vol 108(1), pp.233; vol. 110(2), pp.330).

Ce que l'on vient de constater présentement, et de façon tout à fait imprévue, est que ces mêmes mordénites qui laissent échapper le $N_2O$ des effluents nitriques sont utilisables directement pour obtenir la destruction catalytique massive du protoxyde d'azote dans des gaz qui en contiennent de très fortes proportions. Il suffit pour cela que les gaz entrant sur le catalyseur aient une température suffisante pour que s'amorce la réaction de décomposition. On a constaté en outre que cet amorçage se trouve grandement facilité si les gaz à traiter contiennent en outre des $NO_x$ (NO + $NO_2$). On trouve dans US 5,171,553 une constatation de ce genre sur l'utilisation possible de zéolites à cycles à cinq maillons substituées de certains métaux, mais qui semblent ne conduire à des rendements acceptables de destruction du protoxyde d'azote qu'avec des dérivés de métaux nobles, et donc industriellement fort coûteux.

La demanderesse a constaté qu'il était essentiel que les mordénites utilisées comme catalyseur soient exemptes de sodium, ou tout au moins que leur teneur résiduelle en sodium ne dépasse pas 1.000 ppm. La condition n'est pas suffisante en soi car il s'est avéré que toutes les mordénites désodées ne convenaient pas pour l'invention, mais qu'en revanche, les mordénites-acides (mordénites-H) ou les mordénites-ammonium sont des moyens effectifs de l'invention.

L'invention consiste donc en un procédé pour abaisser la teneur en protoxyde d'azote de gaz en contenant de 30 à 80 %, cette élimination étant opérée par destruction catalytique selon la réaction globale:

$$2N_2O \rightarrow 2N_2 + O_2,$$

l'opération étant réalisée sur un catalyseur zéolitique dont la matière active est une mordénite-H ou une mordénite-ammonium.

Les mordénites avec des rapports Si/Al habituels conviennent, mais les mordénites désaluminées conviennent également bien. Ces mordénites sont de préférence échangées avec un ou plusieurs métaux, en particulier V, Cr, Fe, Co, Ni, Cu, et Bi. Les plus intéressantes des mordénites utiles pour l'invention sont les mordénites-ammonium échangées par du fer, du cobalt ou du bismuth. Pour les besoins de leur mise en oeuvre, elles sont mises sous la forme d'extrudés comportant de 70 à 80 % de mordénite et 20 à 30 % d'un liant, par exemple un mélange d'argile kaolinitique et de bentonite ou alumine.

Le type de mordénite n'est pas indifférent, et on préfère les mordénites à petits pores. Par mordénite à petits pores, on entend une mordénite qui n'adsorbe que les molécules de diamètre cinétique inférieur à environ $4,4.10^{-10}$ m et qui cristallise en aiguilles, par opposition à la mordénite de type "larges pores" qui cristallise en sphérulites et adsorbe le benzène dont le diamètre cinétique est égal à $6,6.10^{-10}$.

Le procédé fonctionne à une température comprise entre environ 250°C et 900°C. Pour sa mise en oeuvre, on injecte les gaz à traiter dans le réacteur catalytique à une température d'environ 250°C - 600°C, plus communément entre 300°C et 500 C sur le catalyseur en lit fixe, la pression étant comprise entre 1 et 5 bars. La vitesse volumétrique horaire (VVH) n'est pas un facteur très déterminant, tout au moins lorsqu'elle se situe dans le domaine banal de 10.000 $h^{-1}$ à 50.000 $h^{-1}$. La réaction étant très exothermique, la température atteinte par le milieu réactionnel peut couramment s'élever à 700-900°C et elle s'auto-entretient du fait de la forte proportion des gaz en protoxyde d'azote. Le procédé est d'autant plus efficace qu'on l'applique à des gaz plus riches en protoxyde d'azote. Lorsque les teneurs en $N_2O$ sont relativement faibles, c'est-à-dire de l'ordre de 20 à 30%, la présence d'oxydes d'azote $NO_x$ dans les gaz est un facteur favorable car, il est alors possible de gagner une centaine de degrés sur la température de réaction. On bénéficie dans ces circonstances d'un gain d'énergie, appréciable surtout au démarrage du système, car une fois installée, la réaction s'entretient d'elle-même.

Il ne semble pas y avoir de limite au procédé pour la teneur finale des gaz en protoxyde d'azote. En tous cas, une teneur finale de 0,1%, que l'on considère comme très acceptable, est très facilement atteinte.

Pour la mise en oeuvre industrielle du procédé, il y a lieu de tenir compte de la très forte exothermicité de la décomposition du N2O. Comme il faut déjà fortement préchauffer les gaz entrant sur le catalyseur, la réaction, lorsqu'elle se déroule sur des gaz à forte concentration en protoxyde d'azote, tend à élever la température à des valeurs difficilement compatibles avec la tenue du matériel. On stabilise les gaz dans le lit catalytique à des températures de l'ordre de 700°C en réalisant la réaction dans des réacteurs-échangeurs du type de ceux qu'on utilise par ailleurs à la synthèse de l'ammoniac et où les gaz d'entrée ne sont pas préchauffés par une source extérieur par les gaz issus du lit catalytique. On trouvera la description (réacteurs T.V.A) dans Nitrogen Industry, Ed. G.D. Honti (Budapest), 1976, pp.254-255.

L'application du procédé selon l'invention est particulièrement intéressante pour le traitement des gaz générés par la fabrication de l'acide adipique par oxydation nitrique du cyclohexanol, que ce cyclohexanol provienne de l'oxydation du cyclohexane (procédé Stamicarbon ou Scientific Design/IFP) ou du phénol (procédé Allied/Monsanto). Il est également ment intéressant d'appliquer le procédé au traitement des gaz provenant de la fabrication du glyoxal par oxydation nitrique de l'acétaldéhyde

Les exemples suivants feront mieux comprendre l'invention. Dans les exemples 1 à 3, on a utilisé un catalyseur du type mordénite/$NH_4$/fer, la mordénite/$NH_4$/fer étant elle-même préparée à partir d'une mordénite-ammonium.

Pour préparer la mordénite-ammonium, on introduit dans un réacteur 100 litres d'une solution de nitrate d'ammonium à 300 grammes par litre puis 25 kg de mordénite sodique à petits pores, répondant à la formule générale élémentaire

$$Na_7 (AlO_2)_7 (SiO_2)_{40}, 24H_2O$$

dont la teneur initiale en sodium sur produit sec était de 5,9% en poids. La suspension est agitée pendant 15 minutes à 100°C. On récupère la mordénite par filtration et on lave sur filtre avec 100 litres d'eau déminéralisée. A ce stade intermédiaire, la teneur en sodium est tombée à 4.000 ppm. Le traitement précédent est répété, avec un lavage final avec 300 litres d'eau déminéralisée. Le produit essoré est séché à 120°C pendant 10 heures. La poudre de mordénite-ammonium ainsi obtenue ne contient plus que 900 ppm de sodium.

On mélange pendant quatre heures 80 kg de cette mordénite avec 15 kg d'argile kaolinitique et 5 kg de bentonite et on file avec ce qu'il faut d'eau pour une extrusion en filets de 3 mm de diamètre qu'on calcine ensuite à 350°C pendant 2 heures. Ces filets sont alors placés dans une solution de 60 kg de sulfate de fer $Fe(SO_4)_2$, $2H_2O$ dans 300 l d'eau distillée et on laisse l'échange s'opérer à 80°C pendant 4 heures. On les lave à l'eau déminéralisée (300 l environ), on les sèche une nuit à l'étude à 120°C, puis on les calcine 4 heures à 400°C. Les filets ainsi obtenus titrent 5% de fer.

Dans les exemples 4 à 7, on a utilisé un catalyseur à base de mordénite/$NH_4$/cobalt, préparé selon le même processus, à la différence près qu'on a remplacé le sulfate de fer par du nitrate de cobalt.

<u>Exemple 1</u> : Décomposition catalytique du $N_2O$ sur une mordénite/$NH_4$/fer - influence de la température des gaz

On place 37,5 ml du catalyseur préparé comme indiqué plus haut, dans un réacteur en inox d'un volume de 50 ml. A l'aide d'un débitmètre massique, on introduit 30% en volume de $N_2O$ dans un courant d'azote que l'on porte à diverses températures. Le facteur de vitesse volumétrique horaire VVH a été pris à 13.300 $h^{-1}$. La pression du gaz est de 3 bars absolus. En sortie de réacteur, on contrôle la teneur des gaz en $N_2O$ par chromatographie en phase gazeuse. Le rendement de décomposition du protoxyde d'azote r est calculé comme:

$$r = ([N_2O]_{entrée} - [N_2O]_{sortie})/[N_2O]_{entrée}.$$

On obtient les résultats suivants :

| Température °C | 440 | 460 | 480 | 500 | 520 | 540 |
|---|---|---|---|---|---|---|
| Rendement r % | 5,3 | 22 | 35 | 61,6 | 76,6 | 82 |

On en déduit que le procédé selon l'invention permet de détruire efficacement le $N_2O$ dans des gaz qui en contiennent quelques 30 %, le seuil d'activation en l'absence de $NO_x$ se situant vers 520°C.

Exemple 2: Influence de la présence d'oxydes d'azote $NO_x$

On procède dans les mêmes conditions que dans l'exemple 1, à la différence près que le dispositif expérimental comporte ici deux débitmètres massiques, l'un permettant d'introduire comme précédemment 30 % en volume de $N_2O$ dans le courant gazeux d'azote, l'autre d'introduire des quantités variables de $NO_x$, et qu'en sortie de réacteur on contrôle aussi la teneur des gaz en $NO_x$ par chimiluminescence. La température est fixée dans cet essai à 440°C. Les résultats sont consignés ci-dessous.

| $NO_x$ ppm | 220 | 300 | 400 | 500 | 600 | 800 | 1200 | 1600 | 2000 |
|---|---|---|---|---|---|---|---|---|---|
| r % | 23 | 44 | 70,2 | 70,3 | 72 | 72 | 72 | 73 | 75 |

On compare ces résultats à ceux de l'exemple 1. Il apparaît nettement que la présence de $NO_x$ abaisse très sensiblement le seuil d'activation et permet d'opérer à une température avantageusement plus basse.

Exemple n°3: Influence de la composition des gaz en $N_2O$ et $NO_x$

On se place dans les conditions de l'exemple 2, en réglant les débitmètres massiques de façon à faire varier la teneur en $N_2O$ entre 30 et 50%, pour fixer la teneur en $NO_x$ tantôt à 0, tantôt à 400 ppmv. Les résultats sont reproduits ci-dessous.

| $N_2O$ (%) | 30 | 30 | 40 | 40 | 50 | 50 |
|---|---|---|---|---|---|---|
| $NO_x$ (ppmv) | 0 | 400 | 0 | 400 | 0 | 400 |
| r % | 7,8 | 70 | 98 | 98 | 99,7 | 99,7 |

On constate que la destruction du protoxyde d'azote est d'autant plus efficace que sa teneur initiale dans les gaz est plus élevée, et qu'aux fortes teneurs, de l'ordre de 50 %, le procédé fonctionne très bien, même en l'absence de $NO_x$.

Exemple 4 : Influence de la vitesse volumétrique horaire

On se place dans les conditions de l'exemple 1, aux différences près que le catalyseur utilisé a été préparé avec du nitrate de cobalt à la place de sulfate de fer, que la température des gaz a été fixée à 440°C, mais que la VVH varie de 10.000 à 30.000 $h^{-1}$. Les résultats sont consignés ci-dessous.

| VVH (h$^{-1}$) | 10 000 | 20 000 | 30 000 |
|---|---|---|---|
| r % | 93 | 90 | 87 |

Exemple 5 : Influence de la présence d'oxydes d'azote NO$_x$

On expérimente dans les conditions de l'exemple 2, à la différence près que le catalyseur est la mordénite/NH$_4$/cobalt de l'exemple 4. La température est ici de 340°C. On obtient :

| NOx (ppmv) | 0 | 200 | 500 | 2000 |
|---|---|---|---|---|
| r % | 74 | 88 | 91 | 92 |

Exemple 6 : Influence de la teneur des gaz en N$_2$0

On procède dans les conditions expérimentales de l'exemple 4, aux différences près que la température des gaz est fixée à 355°C, que la VVH est fixée à 13.300 h$^{-1}$ et que la teneur des gaz en N$_2$O varie de 30 à 50%. On obtient :

| N$_2$O% | 30 | 40 | 50 |
|---|---|---|---|
| r % | 74 | 95 | 97 |

Exemple 7 : Influence de la teneur des gaz en N$_2$0

On procède dans les conditions expérimentales de l'exemple 4, aux différences près que la température est de 440°C et que le gaz est non plus de l'azote, mais de l'air, ce qui correspond aux compositions des gaz tels qu'ils s'échappent des réacteurs de production d'acide adipique. On obtient :

| N$_2$O% | 30 | 40 | 50 |
|---|---|---|---|
| r % | 90 | 92 | 95 |

**Revendications**

1. Procédé pour abaisser la teneur en protoxyde d'azote dans les effluents gazeux qui en contiennent de 30 à 80% par destruction catalytique sur catalyseurs zéolitiques, caractérisé en ce que la matière active du catalyseur est une mordénite-H ou une mordénite-ammonium dont la teneur en sodium est inférieure à 1.000 ppm.

2. Procédé selon la revendication 1, caractérisé en ce que la mordénite-H ou -ammonium est une mordénite à petits pores.

3. Procédé selon l'une ou l'autre des revendications 1 à 2, caractérisé en ce que la mordénite-H ou -ammonium est une mordénite désaluminée.

4. Procédé selon l'une ou l'autre des revendications 1 à 3, caractérisé en ce que la charge catalytique a pour matière active une mordénite-H ou une mordénite-ammonium partiellement échangée avec un ou plusieurs métaux, en particulier V, Cr, Fe, Co, Ni, Cu, et Bi.

5. Procédé selon l'une ou l'autre des revendications 1 à 3, caractérisé en ce que la charge catalytique a pour matière active une mordénite-ammonium partiellement échangée avec le fer.

6. Procédé selon l'une ou l'autre des revendications 1 à 3, caractérisé en ce que la charge catalytique a pour matière active une mordénite-ammonium partiellement échangée avec le cobalt.

7. Procédé selon l'une ou l'autre des revendications 1 à 3, caractérisé en ce que la charge catalytique a pour matière active une mordénite-ammonium partiellement échangée avec le bismuth.

8. Procédé selon l'une quelconque des revendications 1 à 7, caractérisé en ce que les gaz dont on veut éliminer le protoxyde d'azote contiennent en outre des oxydes d'azote $NO_x$ en proportions pouvant atteindre 5.000 ppm.

9. Procédé selon l'une quelconque des revendications 1 à 8, caractérisé en ce qu'il est réalisé dans un réacteur-échangeur de type TVA.

10. Application du procédé tel que décrit dans les revendications 1 à 9 au traitement des gaz provenant de la fabrication de l'acide adipique par oxydation nitrique du cyclohexanol.

11. Application du procédé tel que décrit dans les revendications 1 à 9 au traitement des gaz provenant de la fabrication du glyoxal par oxydation nitrique de l'acétaldéhyde.

12. Application du procédé tel que décrit dans les revendications 1 à 9 au traitement des gaz provenant de la fabrication de l'acide glyoxylique par oxydation nitrique du glyoxal.

**Claims**

1. Process for lowering the nitrous oxide content in the gaseous effluents which contain from 30 to 80 % thereof by catalytic destruction on zeolite catalysts, characterized in that the active substance of the catalyst is a mordenite-H or an ammonium mordenite, the sodium content of which is lower than 1,000 ppm.

2. Process according to Claim 1, characterized in that the mordenite-H or ammonium mordenite is a mordenite with small pores.

3. Process according to either of Claims 1 to 2, characterized in that the mordenite-H or ammonium mordenite is a mordenite from which alumina has been removed.

4. Process according to one or other of Claims 1 to 3, characterized in that the active substance in the catalyst charge is a mordenite-H or an ammonium mordenite partly exchanged with one or more metals, in particular V, Cr, Fe, Co, Ni, Cu and Bi.

5. Process according to one or other of Claims 1 to 3, characterized in that the active substance in the catalyst charge is an ammonium mordenite partly exchanged with iron.

6. Process according to one or other of Claims 1 to 3, characterized in that the active substance in the catalyst charge is an ammonium mordenite partly exchanged with cobalt.

7. Process according to one or other of Claims 1 to 3, characterized in that the active substance in the catalyst charge is an ammonium mordenite partly exchanged with bismuth.

8. Process according to any one of Claims 1 to 7, characterized in that the gases from which it is desired to remove nitrous oxide additionally contain nitrogen oxides $NO_x$ in proportions that can reach 5,000 ppm.

9. Process according to any one of Claims 1 to 8, characterized in that it is carried out in an exchanger-reactor of TVA type.

10. Application of the process as described in Claims 1 to 9 to the treatment of the gases originating from the manufacture of adipic acid by nitric oxidation of cyclohexanol.

11. Application of the process as described in Claims 1 to 9 to the treatment of the gases originating from the manufacture of glyoxal by nitric oxidation of acetaldehyde.

12. Application of the process as described in Claims 1 to 9 to the treatment of the gases originating from the manufacture of glyoxylic acid by nitric oxidation of glyoxal.

**Patentansprüche**

1. Verfahren zur Absenkung des Stickstoffoxidgehalts in Abgasen mit 30 bis 80 % Stickstoffoxidgehalt durch katalytische Zerstörung an Zeolithkatalysatoren, dadurch gekennzeichnet, daß das aktive Material des Katalysators ein H-Mordenit oder ein Ammonium-Mordenit mit einem Natriumgehalt von weniger als 1.000 ppm ist.

2. Verfahren nach Anspruch 1, dadurch gekennzeichnet, daß der H-Mordenit oder Ammonium-Mordenit ein Mordenit mit kleinen Poren ist.

3. Verfahren nach Anspruch 1 oder 2, dadurch gekennzeichnet, daß der H-Mordenit oder Ammonium-Mordenit ein entaluminierter Mordenit ist.

4. Verfahren nach einem der Ansprüche 1 bis 3, dadurch gekennzeichnet, daß die katalytische Charge als aktives Material ein H-Mordenit oder Ammonium-Mordenit aufweist, der teilweise mit einem oder mehreren Metallen, insbesondere V, Cr, Fe, Co, Ni, Cu und Bi, ausgetauscht ist.

5. Verfahren nach einem der Ansprüche 1 bis 3, dadurch gekennzeichnet, daß die katalytische Charge als aktives Material ein Ammonium-Mordenit aufweist, der teilweise mit Eisen ausgetauscht ist.

6. Verfahren nach einem der Ansprüche 1 bis 3, dadurch gekennzeichnet, daß die katalytische Charge als aktives Material ein Ammonium-Mordenit enthält, der teilweise mit Cobalt ausgetauscht ist.

7. Verfahren nach einem der Ansprüche 1 bis 3, dadurch gekennzeichnet, daß die katalytische Charge als aktives Material ein Ammonium-Mordenit enthält, der teilweise mit Bismut ausgetauscht ist.

8. Verfahren nach einem der Ansprüche 1 bis 7, dadurch gekennzeichnet, daß die Gase, bei denen man das Stickstoffoxid entfernen will, zusätzlich Stickstoffoxide $NO_x$ in Mengen von bis zu 5.000 ppm enthalten.

9. Verfahren nach einem der Ansprüche 1 bis 8, dadurch gekennzeichnet, daß es in einem Austauschreaktor vom Typ TVA durchgeführt wird.

10. Anwendung des Verfahrens nach den Ansprüchen 1 bis 9 zur Behandlung von Gasen, die aus der Herstellung von Adipinsäure durch Salpetersäureoxidation von Cyclohexanol stammen.

11. Anwendung des Verfahrens nach den Ansprüchen 1 bis 9 zur Behandlung von Gasen, die aus der Herstellung von Glyoxal durch Salpetersäureoxidation von Acetaldehyd stammen.

12. Anwendung des Verfahrens nach den Ansprüchen 1 bis 9 zur Behandlung von Gasen, die aus der Herstellung von Glyoxylsäure durch Salpetersäureoxidation von Glyoxal stammen.